# EUROPÄISCHE PATENTSCHRIFT

(11) **EP 1 013 907 B1**
(45) Veröffentlichungstag und Bekanntmachung des Hinweises auf die Patenterteilung: **15.03.2006**
(21) Anmeldenummer: 99123871.8
(22) Anmeldetag: 01.12.1999
(51) Int. Cl.: F01N 9/00, F01N 3/20

(54) **Steuersystem für eine Abgasnachbehandlungseinrichtung einer Brennkraftmaschine**
Control system of an exhaust gas treating device of an internal combustion engine
Système de commande d'un dispositif pour traiter les gaz d'échappement d' un moteur à combustion interne

(30) Priorität: 11.12.1998 DE 19857328
(43) Veröffentlichungstag der Anmeldung: 28.06.2000
(73) Patentinhaber: Argillon GmbH, 96257 Redwitz (DE)
(72) Erfinder: Wissler, Gerhard, Dr., 93104 Sünching (DE); Tost, Rainer, 90427 Nürnberg (DE)
(74) Vertreter: Tergau & Pohl Patentanwälte

(56) Entgegenhaltungen:
- EP-A- 0 822 323
- EP-A- 0 905 356
- EP-A- 0 937 871
- EP-A- 0 953 739
- DE-U- 29 717 494
- US-A- 5 523 948

## Beschreibung

Die Erfindung betrifft ein Steuersystem für eine Abgasnachbehandlungseinrichtung einer Brennkraftmaschine für ein Kraftfahrzeug gemäß dem Oberbegriff des Patentanspruches 1. Ein derartiges Steuersystem ist beispielsweise aus DE 297 17 494 U1 zu entnehmen.

Moderne Fahrzeugkonzepte umfassen eine Vielzahl von elektronischen Steuergeräten, die entweder über einen einzigen Datenbus oder mehrere Bussysteme miteinander und/oder mit einem zentralen elektronischen Steuergerät des Fahrzeuges kommunizieren. Der entsprechende Datentransfer erfolgt dabei digital beispielsweise mit Hilfe des CAN (Controller Area Network) - Konzepts. Es handelt sich dabei um ein serielles Busnetzwerk mit einem speziellen Datenübertragungsprotokoll, in welches alle entsprechende Komponenten eingebunden sind und welches eine Quasi-Echtzeitanwendung mit sehr hoher Betriebssicherheit erlaubt.

Die Einsatzmöglichkeiten von innerhalb eines solchen CAN-Konzepten verwendeten elektronischen Steuergeräten sind im allgemeinen auf ihren einmal ursprünglich definierten Verwendungszweck begrenzt. Aus Kostengründen (Komponenten- und Bauraumbedarf) werden nur die für den definierten Verwendungszweck benötigten Schaltungen, Bauelemente und elektrischen Anschlüsse vorgesehen.

Im geringen Umfang wird bei einigen Steuergeräten im Hinblick auf zukünftige Erweiterungsmöglichkeiten eine begrenzte Anzahl von Zusatzfunktionen und/oder Reserveanschlüssen vorgehalten, um bei Bedarf auch einen erweiterten Einsatzbereich zu ermöglichen. Dies führt zu höheren Kosten bei der Herstellung der Steuergeräte, als für eine Auslegung für den aktuellen Einsatz notwendig wäre. Andererseits entsteht auf diese Weise eine hohe Anzahl von Steuergerätetypen, die sich funktional nur in Teilbereichen unterscheiden und zu einem erhöhten Aufwand hinsichtlich der Lagerhaltung und Logistik führen.

Der Erfindung liegt deshalb die Aufgabe zugrunde, ein Steuersystem für eine Abgasnachbehandlungseinrichtung einer Brennkraftmaschine anzugeben, das bei geringem Aufwand eine hohe Flexibilität in der Anwendung, insbesondere bei einer Nachrüstung von mit einem Motorsteuergerät der Brennkraftmaschine kommunizierenden weiteren Steuergeräten sicherstellt.

Diese Aufgabe wird mit einem Steuersystem gelöst, wie es in dem unabhängigen Patentanspruch angegeben ist. Vorteilhafte Weiterbildungen sind in den Unteransprüchen angegeben.

Durch externe Schnittstellenmodule, denen zusätzliche Signale zugeführt werden, die zur Steuerung der Abgasnachbehandlungseinrichtung notwendig sind und/oder die Funktionen zum Aufbereiten der Signale enthalten und mittels eines seriellen Busnetzwerks mit einer die Dosierung des Reduktionsmittel steuernden Dosiersteuergerätes verbunden sind, ergibt sich auf einfache Weise ein erweiterter Einsatzbereich für das Dosiersteuergerät und damit der gesamten Abgasnachbehandlungsanlage.

In Abhängigkeit von den gegebenen Verhältnissen im Kraftfahrzeug, insbesondere der Peripherie des Motorsteuergerätes wird ein entsprechendes Schnittstellenmodul gewählt und die Abgasnachbehandlungseinrichtung kann ohne Eingriff in das Motorsteuergerät und ohne Eingriff in das Dosiersteuergerät nachgerüstet werden. Da ein einziges Standard-Dosiersteuergerät für mit unterschiedlichen Motorsteuergeräten ausgerüstete Kraftfahrzeuge verwendet werden kann, kann dieses in großer Stückzahl und damit kostengünstig erstellt werden.

Die Kosten für die zusätzlichen Schnittstellenmodule sind aufgrund ihrer geringen Komplexität weitaus niedriger -es müssen lediglich Funktionen zur Erfassung und Verarbeitung der Zusatzinformationen bereitgestellt werden- als die Kosten für ein multifunktionales Dosiersteuergerät, das für jeden möglichen Einsatzbereich ausgerüstet ist und damit viele Reservefunktionen beinhaltet, die nur von Fall zu Fall gebraucht werden.

Die Erfindung wird anhand der Zeichnung näher erläutert. Dabei zeigen:
- Figur 1: ein Blockschaltbild für ein Steuersystem einer Brennkraftmaschine mit kompatiblen Bussystemen in einer Standardanwendung,
- Figur 2: ein Blockschaltbild für ein Steuersystem bei Kraftfahrzeugen ohne CAN-Bussystem,
- Figur 3: ein Blockschaltbild für ein Steuersystem bei nicht kompatiblen Bussystemen,
- Figur 4: ein Blockschaltbild für ein Steuersystem bei nicht belastbarem Bussystem,
- Figur 5: ein Blockschaltbild für ein Steuersystem mit Bussystem und zusätzlicher Signaleinspeisung in das Bussystem und

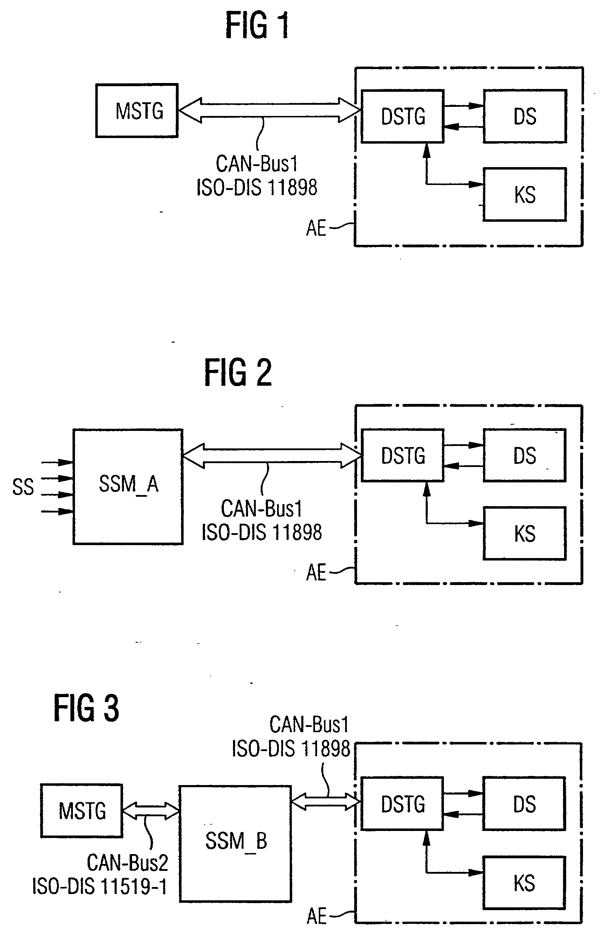

In Figur 1 ist schematisch anhand einer Blockdarstellung ein Steuersystem_für eine mit Luftüberschuß betreibbare Brennkraftmaschine (Dieselbrennkraftmaschine oder Mager-Brennkraftmaschine) dargestellt, die eine Abgasnachbehandlungseinrichtung AE aufweist.

Die Stickoxidemission solcher Brennkraftmaschinen läßt sich mit Hilfe der sogenannten selektiven katalytischen Reaktion (Selectiv Catalytic Reduction, SCR-Verfahren,) vermindern.

Als Reduktionsmittel wird dabei häufig Ammoniak NH₃ dem SCR-Prozeß durch die Harnstoff-Hydrolyse zur Verfügung gestellt. Der in wässriger Lösung mitgeführte Harnstoff dient dabei als Ammoniakträger und wird mit Hilfe eines Dosiersystems vor einem Hydrolysekatalysator zu-Ammoniak umgewandelt, der dann in dem eigentlichen SCR-Katalysator die Stickoxide reduziert.

Darüberhinaus ist es auch möglich, Ammoniak unmittelbar als Reduktionsmittel einzusetzen. Es ist dann kein Hydrolysekatalysator notwendig. Auch Kraftstoff oder Derivate können als Reduktionsmittel verwendet werden.

Eine solche Abgasnachbehandlungseinrichtung AE, in der Regel auch als DENOX-Anlage bezeichnet, umfasst ein Dosiersystem DS für das Reduktionsmittel, ein Katalysatorsystem KS und ein die Dosierung des Reduktionsmittel steuerndes, elektronisches Dosiersteuergerät DSTG.

Das Dosiersystem DS beinhaltet im wesentlichen einen Behälter für das Reduktionsmittel mit einer zugeordneten Heizeinrichtung und einer Pumpe zum Fördern des Reduktionsmittels, sowie ein Dosierventil zum Eindüsen des Reduktionsmittels in den Abgastrakt. Über eine entsprechende Sensorik wird sowohl die Temperatur, als auch der Füllstand des Reduktionsmittels im Behälter erfasst. Zusätzlich kann auch noch die Dichte des Reduktionsmittels erfasst werden. Diese Signale werden an das Dosiersteuergerät DSTG zur Signalaufbereitung und Weiterverarbeitung übergeben.

Das Katalysatorsystem KS weist einen Hydrolysekatalysator und einen SCR-Katalysator auf, wobei auch beide Katalysatortypen in einem einzigen Gehäuse untergebracht sein können. Bei entsprechender Auswahl des Reduktionsmittels kann der Hydrolysekatalysator gänzlich entfallen. Stromabwärts und/oder stromaufwärts des SCR-Katalysators kann auch zusätzlich ein Oxidationskatalysator angeordnet sein. Die Signale von stromaufwärts und stromabwärts des SCR-Katalysators angeordneten Sensoren z.B. für Temperatur und NOx-Konzentration werden ebenfalls dem Dosiersteuergerät DSTG zugeführt.

Das Dosiersteuergerät DSTG ist zum gegenseitigen Datentransfer über ein Bussystem CAN-Bus1 mit einem für die Steuerung und Regelung der Brennkraftmaschine vorgesehenen Motorsteuergerät MSTG verbunden. Über das Bussystem CAN-Bus1, beispielsweise über das genormte Bussystem ISO-DIS 11898 (CAN High-Speed), werden die zur Berechnung der zu dosierenden Reduktionsmittelmenge relevanten Betriebsparameter, wie z.B. Drehzahl, Luftmasse, Kraftstoffmasse, Regelweg einer Einspritzpumpe, Abgasmassenstrom, Betriebstemperatur, Ladelufttemperatur, Spritzbeginn usw. dem Dosiersteuergerät DSTG übergeben.

Das Ausrüsten eines Neufahrzeuges mit einer solchen Abgasnachbehandlungeinrichtung AE und die Vernetzung des Dosiersteuergerätes DSTG mit dem Motorsteuergerät MSTG stellt keine Schwierigkeit dar, das von Beginn an auf Kompatibilität hinsichtlich der Schnittstellen zwischen den beiden Steuergeraten geachtet werden kann.

Probleme treten aber auf, wenn bereits in Verkehr befindliche Kraftfahrzeuge, die mit den unterschiedlichsten Motorsteuerungsgeräten ausgestattet sein können mit ein und derselben Abgasnachbehandlungseinrichtung der beschriebenen Art mit einem standardisierten Dosiersteuergerät nachgerüstet werden sollen, um beispielsweise auch in Zukunft verschärfte Abgasgrenzwerte einhalten zu können.

In Figur 2 ist ein Steuersystem gezeigt, bei dem die Abgasnachbehandlungseinrichtung AE in einem Kraftfahrzeug eingesetzt wird, das kein Bussystem besitzt oder an dessen vorhandenen Bussystem keine zusätzlichen Komponenten (Knoten) angeschlossen werden dürfen. In diesem Fall ist ein Schnittstellenmodul SSM_A zwischen dem Motorsteuergerät MSTG und dem Dosiersteuergerät DSTG vorgesehen. Das Schnittstellenmodul SSM_A wird so ausgelegt, daß über einzelne Sensoren die aktuellen Betriebsdaten der Brennkraftmaschine, die zur Steuerung der Abgasnachbehandlungseinrichtung AE benötigt werden, erfasst und über das Bussystem CAN-Busl zum Dosiersteuergerät DSTG gesendet werden und eine Kommunikation zwischen den beiden Einrichtungen aufgebaut wird. Als Bussystem dient dabei das genormte Bussystem ISO-DIS 11898 des Standard-Dosiersteuergerätes DSTG. Die Signalaufbereitung erfolgt im Schnittstellenmodul SSM_A und die Daten werden in gleicher Form wie von einem Motorsteuergerät MSTG gesendet, wie es in der Figur 1 angegeben ist. Somit ist bei dieser Variante keine Änderung der Beschaltung oder der Softwar in dem Dosiersteuergerät DSTG notwendig.

Wird die Abgasnachbehandlungseinrichtung AE in einem Kraftfahrzeug eingesetzt, z.B. nachgerüstet, dessen Motorsteuergerät MSTG ein bezogen auf das Dosiersteuergerät DSTG nicht kompatibles Bussystem CAN-Bus2, beispielsweise den genormten ISO-DIS 11519-1 (CAN Low -Speed), einen 24 V-CAN Bus oder RS 232 aufweist, so wird gemäß Figur 3 ein Schnittstellenmodul SSM_B zwischen Motorsteuergerät MSTG und Dosiersteuergerät DSTG eingefügt. Das Schnittstellenmodul SSM_B wird dabei so ausgelegt, daß die aktuellen Betriebsdaten der Brennkraftmaschine über die entsprechende Schnittstelle erfasst und über den CAN_Bus1 zum Dosiersteuergerät DSTG gesendet werden und eine Kommunikation zwischen den beiden Geräten aufgebaut wird. Die Signalaufbereitung erfolgt im Schnittstellenmodul SSM_B und die Daten werden in gleicher Form wie von einem Motorsteuergerät MSTG gesendet, wie es in der Figur 1 angegeben ist. Somit ist auch bei dieser Variante keine Änderung der Beschaltung oder der Software in dem Dosiersteuergerät DSTG notwendig.

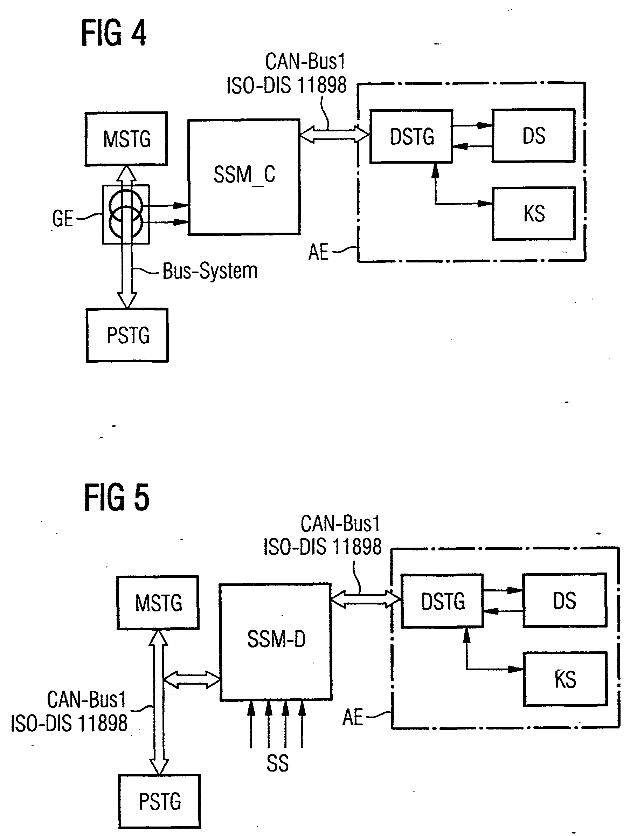

Wird die Abgasnachbehandlungseinrichtung AE in einem Kraftfahrzeug eingesetzt, das zwar ein Bussystem (CAN,VAN,RS 232) aufweist, dieses aber nicht belastet bzw. beeinflußt werden darf, so wird gemäß Figur 4 ein Schnittstellenmodul SSM_C zwischen Motorsteuergerät MSTG und Dosiersteuergerät DSTG eingefügt. Mit dem Block PSTG ist in dieser Darstellung ein Pumpensteuergerät bezeichnet, das die Einspritzpumpe bei einer Dieselbrennkraftmaschine steuert. Dieses ist über ein nicht näher bezeichnetes Bussystem mit dem Motorsteuergerät MSTG verbunden und über das Parameter wie Einspritzbeginnwinkel, Einspritzdauer usw. übertragen werden.

Das Schnittstellenmodul SSM_C wird so ausgelegt, daß die aktuellen Betriebsdaten der Brennkraftmaschine über eine Einrichtung zur galvanischen Entkopplung GE aus der entsprechenden Schnittstelle erfasst und über den CAN_Bus1 zum Dosiersteuergerät DSTG gesendet werden und eine Kommunikation zwischen den beiden Geräten aufgebaut wird. Die galvanische Trennung kann über Optokoppler, Spulen oder andere geeignete Stromsensoren, z.B. Magnetfeldsonden erfolgen. Die Signalaufbereitung erfolgt im Schnittstellenmodul SSM_C und die Daten werden in gleicher Form wie von einem Motorsteuergerät MSTG gesendet, wie es in der Figur 1 angegeben ist. Somit ist auch bei dieser Variante keine Änderung der Beschaltung oder der Software in dem Dosiersteuergerät DSTG notwendig.

Weist das Kraftfahrzeug zwar ein kompatibles Bussystem CAN-Bus1 auf, aber über dieses Bussystem stehen nicht alle zur Steuerung der Abgasnachbehandlungseinrichtung AE notwendigen Informationen zur Verfügung, so wird ein Schnittstellenmodul SSM_D zwischen Motorsteuergerät MSTG und Dosiersteuergerät DSTG eingefügt (Figur 5). Das Schnittstellenmodul SSM_D wird so ausgelegt, daß die zusätzlich benötigten Betriebsdaten der Brennkraftmaschine über die entsprechenden Sensoren erfasst und in die CAN-Busbotschaften eingefügt und zum Dosiersteuergerät DSTG gesendet werden und eine Kommunikation zwischen den beiden Geräten aufgebaut wird. Die Signalaufbereitung erfolgt im Schnittstellenmodul SSM_D und die Daten werden in gleicher Form wie von einem Motorsteuergerät MSTG gesendet, wie es in der Figur 1 angegeben ist. Somit ist auch bei dieser Variante keine Änderung der Beschaltung oder der Software in dem Dosiersteuergerät DSTG notwendig.

## Patentansprüche

1. Steuersystem für eine Abgasnachbehandlungseinrichtung einer mit einem Motorsteuergerät (MSTG) versehenen, mit Luftüberschuß betreibbaren Brennkraftmaschine eines Kraftfahrzeuges, wobei die Abgasnachbehandlungseinrichtung (AE) ein Dosiersystem (DS) zum Einbringen von Reduktionsmittel in das Abgas der Brennkraftmaschine, ein Katalysatorsystem (KS) im Abgastrakt der Brennkraftmaschine und ein die Dosierung des Reduktionsmittels steuerndes, eine busfähige Schnittstelle aufweisendes Dosiersteuergerät (DSTG) beinhaltet,
**gekennzeichnet durch**
ein zwischen dem Motorsteuergerät (MSTG) und dem Dosiersteuergerät (DSTG) angeordnetes Schnittstellenmodul (SSM_A, SSM_B, SSM_C, SSM_D), dem die zum Steuern der Abgasnachbehandlungseinrichtung (AE) benötigten aktuellen Betriebsparameter (SS) der Brennkraftmaschine zugeführt werden und das Funktionen zum bedarfsweisen Digitalisieren der Betriebs-parameter enthält, wobei das Schnittstellenmodul (SSM_A, SSM_B, SSM_C, SSM_D) über ein serielles Bussystem (CAN-Bus1)mit der Schnittstelle des Dosiersteuergeräts (DSTG) verbunden ist und die aus den Betriebsparametern abgeleiteten Daten über das serielle Bussystem (CAN-Bus1) zu dem Dosiersteuergerät (DSTG) übertragen werden.

2. Steuersystem nach Anspruch 1, **dadurch gekennzeichnet, daß** die Betriebsparameter (SS) ausschließlich über Sensoren erfasst werden und unmittelbar an das Schnittstellenmodul (SSM_A) übergeben werden.

3. Steuersystem nach Anspruch 1, **dadurch gekennzeichnet, daß** die den einzelnen Betriebsparametern (SS) entsprechenden Daten ausschließlich über ein bezogen auf das dem Dosiersteuergerät (DSTG) zugeordnetes Bussystem (CAN-Bus1) nichtkompatibles Bussystem (CAN-Bus2) von dem Motorsteuergerät (MSTG-) zu dem Schnittstellenmodul (SSM_B) übertragen werden.

4. Steuersystem nach Anspruch 1, **dadurch gekennzeichnet, daß** die den einzelnen Betriebsparametern (SS) entsprechenden Daten mittels einer Einrichtung (GE) zum galvanischen Entkoppeln aus einem dem Motorsteuergerät (MSTG) zugeordneten Bussystem erfasst und dem Schnittstellenmodul (SSM_C) zugeführtwerden.

5. Steuersystem nach Anspruch 1, **dadurch gekennzeichnet, daß** ein Teil der Betriebsparameter (SS) über Sensoren erfasst werden und unmittelbar an das Schnittstellenmodul (SSM_A) übergeben werden und ein Teil der den einzelnen Betriebsparametern (SS) entsprechenden Daten über einen dem Motorsteuergerät (MSTG) zugeordneten Bussystem (CAN-Bus1) zu dem Schnittstellenmodul (SSM_D) übertragen werden.

## Claims

1. Control system for an exhaust gas after-treatment device of an internal combustion engine that pertains to a motor vehicle, is provided with an engine control unit (MSTG) and can be operated with excess air, with the exhaust gas after-treatment device (AE) containing a metering system (DS) for introducing reducing agent into the exhaust gas of the internal combustion engine, a catalytic-converter system (KS) in the exhaust gas tract of the internal combustion engine, and a metering control unit (DSTG) that controls the metering of the reducing agent and has an interface with bus capability,
**characterised by**
an interface module (SSM_A, SSM_B, SSM_C, SSM_D) which is arranged between the engine control unit (MSTG) and the metering control unit (DSTG) and to which the current operating parameters (SS) of the internal combustion engine that are required to control the exhaust gas after-treatment device (AE) are fed and which contains functions for the digitization, as required, of the operating parameters, with the interface module (SSM_A, SSM_B, SSM_C, SSM_D) being connected to the interface of the metering control unit (DSTG) by way of a serial bus system (CAN-Bus1) and the data that are derived from the operating parameters being transmitted to the metering control unit (DSTG) by way of the serial bus system (CAN-Bus1).

2. Control system according to claim 1, **characterised in that** the operating parameters (SS) are exclusively detected by way of sensors and transferred directly to the interface module (SSM_A).

3. Control system according to claim 1, **characterised in that** the data that correspond to the individual operating parameters (SS) are transmitted exclusively by way of a bus system (CAN-Bus2), which is not compatible with the bus system (CAN-Bus1) associated with the metering control unit (DSTG), from the engine control unit (MSTG) to the interface module (SSM_B).

4. Control system according to claim 1, **characterised in that** the data that correspond to the individual operating parameters (SS) are detected by means of a device (GE) for galvanic decoupling from a bus system, which is associated with the engine control unit (MSTG), and are fed to the interface module (SSM_C).

5. Control system according to claim 1, **characterised in that** a portion of the operating parameters (SS) are detected by way of sensors and transferred directly to the interface module (SSM_A - *sic*), and a portion of the data that correspond to the individual operating parameters (SS) are transmitted by way of a bus system (CAN_Bus1), which is associated with the engine control unit (MSTG), to the interface module (SSM_D).

## Revendications

1. Système de commande d'un dispositif de traitement des gaz d'échappement d'un moteur à combustion interne, muni d'un appareil (MSTG) de commande de moteur et pouvant fonctionner avec un excès d'air, d'un véhicule automobile, le dispositif (AE) de traitement des gaz d'échappement comportant un système (DS) d'addition dosée d'injection d'agent réducteur dans les gaz d'échappement du moteur à combustion interne, un système (KS) de pot catalytique dans le trajet des gaz d'échappement du moteur à combustion et un appareil (DSTG) de commande d'addition dosée commandant l'addition dosée de l'agent réducteur et ayant une interface pour bus,
**caractérisé par**
un module (SSM_A, SSM_B, SSM_C, SSM_D) qui est disposé entre l'appareil (MSTG) de commande du moteur et l'appareil (DSTG) de commande de l'addition dosée, auquel peuvent être envoyés les paramètres (SS) de fonctionnement instantanés du moteur à combustion interne nécessaires pour commander le dispositif (AE) de traitement des gaz d'échappement, et qui comporte des fonctions de numérisation suivant les besoins des paramètres de fonctionnement, le module (SSM_A, SSM_B, SSM_C, SSM_D) d'interface étant relié par un système (CAN-Bus1) de bus séquentiel à l'interface de l'appareil (DTSG) de commande d'addition dosée et les données dérivées de paramètres de fonctionnement étant transmises à l'appareil (DSTG) de commande d'addition dosée par le système (CAN-Bus1) de bus séquentiel.

2. Système de commande suivant la revendication 1, **caractérisé en ce que** les paramètres (SS) de fonctionnement sont détectés exclusivement par des capteurs et sont transmis directement au module (SSM_A) d'interface.

3. Système de commande suivant la revendication 1, **caractérisé en ce que** les données correspondant aux paramètres (SS) de fonctionnement sont transmises de l'appareil (MSTG) de commande du moteur au module (SSM_B) d'interface exclusivement par un système (CAN-Bus2) de bus qui n'est pas compatible avec le système (CAN-Bus1) de bus associé à l'appareil (DSTG) de commande d'addition dosée.

4. Système de commande suivant la revendication 1, **caractérisé en ce que** les données correspondant aux paramètres (SS) de fonctionnement sont détectées au moyen d'un dispositif (GE) de découplage galvanique d'un système de bus associé à l'appareil (MSTG) de commande du moteur et sont envoyées au module (SSM_C) d'interface.

5. Système de commande suivant la revendication 1, **caractérisé en ce qu'**une partie des paramètres (SS) de fonctionnement est détectée par des capteurs et est transmise directement au module (SSM_A) d'interface et une partie des données correspondant aux paramètres (SS) de fonctionnement est transmise au module (SSM_D) d'interface par un système (CAN-Bus1) de bus associé à l'appareil (MSTG) de commande du moteur.
